# EUROPÄISCHE PATENTANMELDUNG

(11) **EP 2 080 963 A2**
(43) Veröffentlichungstag der Anmeldung: **22.07.2009**
(21) Anmeldenummer: 08021482.8
(22) Anmeldetag: 11.12.2008
(51) Int. Cl.: F24J 2/46, F24J 2/51

(54) **Kollektorgehäuse für Solarkollektoren und Verfahren zur Montage eines derartigen Kollektorgehäuses**

(30) Priorität: 17.01.2008 DE 102008005856
(71) Anmelder: Joma-Polytec Kunststofftechnik GmbH, 72411 Bodelshausen (DE)
(72) Erfinder: Heinz, Stefan, 72411 Bodelshausen (DE); Wölki, Wolfgang, 72414 Rangendingen (DE)
(74) Vertreter: Dreiss

(57) **Zusammenfassung**

Die Erfindung betrifft ein Kollektorgehäuse (10) für Solarkollektoren, mit einer eine im Wesentlichen rechteckigen Grundfläche vorsehenden Rückwand (12) und mit einem die Rückwand einfassenden Rahmen (14), wobei der Rahmen (14) von aus Hohlkammerprofilen gebildeten Seitenwänden (16) sowie die Seitenwände (16) miteinander verbindenden Eckverbindern (18) zusammengesetzt ist und dass die Rückwand (12) aus durch Einbringen von Schaummaterial in den vormontierten Rahmen (14) hergestelltem Hartschaum ist. Ferner betrifft die Erfindung ein Verfahren zur Montage eines Kollektorgehäuses.

## Beschreibung

Die Erfindung betrifft ein Kollektorgehäuse für Solarkollektoren, mit einer eine im Wesentlichen rechteckigen Grundfläche vorsehenden Rückwand und mit einem die Rückwand einfassenden Rahmen.

Derartige Kollektorgehäuse dienen zur Aufnahme von Solarkollektoren, die beispielsweise ein Übertragungsmedium durch einfallende Sonnenenergie erwärmen.

Der vorliegenden Erfindung liegt die Aufgabe zugrunde, ein Kollektorgehäuse bereitzustellen, das auf einfache Art und Weise hergestellt werden kann, günstige thermische Eigenschaften aufweist und dennoch funktionssicher arbeitet.

Diese Aufgabe wird mit einem Kollektorgehäuse mit den Merkmalen des Anspruchs 1 gelöst. Dazu weist der Rahmen Seitenwände und die Seitenwände miteinander verbindende Eckverbinder auf. Dies hat den Vorteil, dass die Grundfläche des Rahmens durch Verwendung von entsprechend langen Seitenwänden beliebig einstellbar ist. Die Seitenwände sind dabei als Hohlkammerprofile ausgebildet, die je nach Größe des bereitzustellenden Rahmens auf eine entsprechende Länge abzulängen sind. Die Rückwand des Gehäuses ist aus Hartschaum, der als Schaummaterial in von in den vormontierten Rahmen eingegossenem wird. Bei der Herstellung des Kollektorgehäuses wird folglich zunächst der Rahmen, bestehend aus Seitenwänden und Eckverbindern, vormontiert. Anschließend wird in den Rahmen zur Bildung der Rückwand Schaummaterial gegeben, das dann zur Bildung der Rückwand zu Hartschaum aushärtet.
Eine derartige Rückwand ist auf einfache Art und Weise unabhängig von der tatsächlichen Rahmengröße herstellbar. Hartschaum hat zudem thermisch günstige Eigenschaften. Vorzugsweise sind die Seitenwände und die Eckverbinder aus Kunststoff, wobei die Seitenwände insbesondere durch Extrudieren und die Eckverbinder insbesondere durch Spritzgießen hergestellt sein können.

Als Hartschaum kann vorzugsweise Hartschaum PU, CO₂ getrieben, Verwendung finden, der insbesondere ausgasungsarm sein kann. Vorzugsweise entspricht der vorzusehende Hartschaum der Brandschutzklasse B2 und hat eine Dichte von 50 bis 100 g/l.

Das Profil kann insbesondere aus thermoplastischen Kunststoffen, vorzugsweise mit einem Füllstoff, sein. Die Eckverbinder sind vorzugsweise aus dem gleichen Material wie die Seitenwände.

Vorzugsweise ist vorgesehen, dass der Hartschaum die Seitenwände und die Eckverbinder unlösbar miteinander verbindet. Dies hat den Vorteil, dass keine zusätzlichen Befestigungsmittel zur festen und dauerhaften Verbindung von den Seitenwänden, den Eckverbindern und der Rückwand vorzusehen sind. Über den Hartschaum werden folglich die Seitenwände mit den Eckverbindern verklebt.

Vorzugsweise sind die Seitenwände und die Eckverbinder derart ausgebildet, dass sie zur Vormontage miteinander lösbar gefügt werden. Vorzugsweise werden die Seitenwände mit den Eckverbindern lediglich versteckt. Ebenfalls ist denkbar, dass ein unlösbares Verstecken, insbesondere durch Vorsehen geeigneter Rastmittel, vorgesehen wird.

Die Verbindungsmittel zum Fügen der Seitenwände mit den Eckverbindern sind vorzugsweise ausschließlich an den Eckverbindern vorhanden. Dies hat den Vorteil, dass die Seitenwände als auf entsprechende Länge abgeschnittene Hohlprofile Verwendung finden können; die Seitenwände bleiben damit unversehrt.

Zur Zu- und Ableitung des Übertragungsmediums in bzw. aus dem Kollektorgehäuse sind an den Eckverbindern Durchbrüche für Leitungszugänge bzw. Leitungsabgänge vorgesehen. Dies hat den Vorteil, dass die Seitenwände, die ja als Hohlkammerprofile ausgebildet sind, unversehrt bleiben können. In den Hohlräumen der Hohlkammerprofile können Leitungen oder Kabel vorgesehen sein bzw. die Hohlräume können als Leitungen, Leitungszugänge oder Leitungsabgänge Verwendung finden.

Denkbar ist, dass die Eckverbinder jeweils zwei Durchbrüche an zueinander um 90° zueinander versetzt angeordneten Wandungsabschnitten aufweisen. Hierdurch können Zu- bzw. Ableitungen von verschiedenen Seiten am Gehäuse angebracht bzw. durch dieses hindurchgeleitet werden.

Um auch bei geringer Bauhöhe des Kollektorrahmens einen entsprechend großen Durchmesser der Zu- bzw. Ableitungen vorsehen zu können, ist denkbar, dass der Hartschaum auf der innen liegenden Seite in den Bereich, der an die Durchbrüche angrenzt, Ausformungen für die Leitungen aufweist. Insbesondere kann die Innenoberfläche des Hartschaums komplementär zu der Ihr zugewandten Seite des Kollektors ausgebildet sein, so dass der Kollektor großflächig vom Hartschaum aufgenommen wird.

Vorzugsweise ist ebenfalls denkbar, dass sämtliche Eckverbinder identisch ausgebildet sind und jeweils zwei über Eck angeordnete Durchbrüche vorsehen. Um nicht verwendete Durchbrüche sicher verschließen zu können, sind vorzugsweise entsprechend ausgebildete Abdeckteile vorgesehen.

Zur Reflektion von Strahlungsenergie ist es vorteilhaft, wenn auf der Innenseite der des Kollektorgehäuses zugewandten Vorderseite der Rückwand eine Metallfolie, insbesondere eine Aluminiumfolie, vorgesehen ist. Die Metallfolie erstreckt sich vorzugsweise über die gesamte Innenoberfläche des Hartschaums. Die Metallfolie kann zudem verhindern, dass Ausgasungen des Schaums in das Innere des Gehäuses eindringen und sich am Kollektor oder an einer Abdeckscheide niederschlagen.

Vorzugsweise wird beim Herstellprozess der Rückwand die Folie mit eingebracht, so dass sie vollflächig mit dem Hartschaum verklebt ist.

Auf der der Innenseite des Kollektorgehäuses abgewandten Rückseite der Rückwand kann ein Schutzgewebe vorgesehen sein. Das Schutzgewebe kann insbesondere aus Metall oder Kunststoff hergestellt sein. Hierdurch wird erreicht, dass flüchtige Bestandteile aus dem Hartschaum aus der Rückwand entweichen können und sich nicht auf einer in den Rahmen einzusetzenden Glasscheibe niederschlagen können. Zudem kann ein derartiges Schutzgitter Schutz vor Tierfraß oder Einnistung von Vögeln oder Ungeziefer in dem Kollektorgehäuse bieten.

Der Hartschaum ist dabei vorzugsweise unmittelbar auf das Schutzgewebe aufgebracht. Hierdurch entfallen Befestigungsmittel zur Anordnung des Schutzgewebes im Gehäuse.

Gemäß einer weiteren Ausbildung der Erfindung kann vorgesehen sein, dass die Seitenwände und/oder die Eckverbinder auf ihren dem Inneren des Kollektorgehäuses zugewandten Innenseiten im unteren Endabschnitt einen nach innen gerichteten Aufnahmeabschnitt zur Aufnahme des Schutzgewebes aufweisen. Hierdurch kann das Schutzgewebe vor Einbringen des Schaums in den Rahmen eingesetzt werden. Beim Eingießen des Schaums in den Rahmen wird folglich der Schaum zur unlösbaren Verbindung mit dem Schutzgewebe an dieses angegossen.

Ferner ist vorteilhaft, wenn die Seitenwände und/oder die Eckverbinder auf der der Rückwand abgewandten Oberkante Auflageabschnitte zu Auflage und/oder Einfassung einer Kollektorscheibe vorsehen. Diese Auflageabschnitte können insbesondere eine Silikonierebene für die Glasscheibe bilden. Dadurch kann ein positionsgenaues Anordnen der Glasscheibe am Gehäuse auf einfache Art und Weise realisiert werden.

Ferner ist vorteilhaft, wenn die Seitenwände und/oder die Eckverbinder auf ihrer dem Inneren des Kollektorgehäuses zugewandten Innenseite einen wenigstens abschnittsweise parallel zur Rückwand verlaufenden Montageabschnitt zur Befestigung des Solarkollektors vorsehen. Dieser Montageabschnitt ist vorzugsweise als nach innen ausgebildete Schulter realisiert, die vorzugsweise im mittleren Bereich der Seitenwände bzw. der Eckverbinder angeordnet ist. Hierdurch wird insbesondere eine Positionierkante für den Solarkollektor geschaffen, der dann auf einfache Art und Weise positionsgenau in das Gehäuse eingesetzt werden kann.

Die Seitenwände bzw. Eckverbinder können ferner auf ihrer dem Inneren des Kollektorgehäuses zugewandten Innenseite in dem Bereich, in dem die Rückwand an die Innenseite angrenzt, einen Verzahnungsabschnitt zur Verzahnung mit dem an dem jeweiligen Hohlprofil anliegenden Bereich der Rückwand aufweisen. Ein derartiges Verzahnungsprofil kann beispielsweise durch eingebrachte Rillen oder Nuten und/oder durch aufgebrachte Materialerhöhungen realisiert sein. Dadurch kann vorteilhaft erreicht werden, dass zwischen der Rückwand und den Seitenwänden bzw. den Eckverbindern neben der stoffschlüssigen Verbindung auch eine formschlüssige Verbindung realisiert werden kann, über welche insbesondere senkrecht zur Ebene der Rückwand wirkende Kräfte übertragen werden können.

Die eingangs genannte Aufgabe wird auch durch ein Verfahren zur Montage eines insbesondere erfindungsgemäßen Kollektorgehäuses gemäß Anspruch 16 gelöst. Ein derartiges Verfahren sieht folglich vor, dass zunächst der Rahmen aus den Seitenwänden, die aus Hohlkammerprofilen gebildet sind, und aus die Seitenwände miteinander verbindenden Eckverbindern gebildet wird und dass dann Schaummaterial in den Bodenbereich des Rahmens zur Herstellung einer Rückwand aus Hartschaum gegeben wird. Das Schaummaterial kann insbesondere mittels einer Hochdruckanlage eingebracht werden.

Vorzugsweise wird vor dem Vergießen das Schaummaterial in den Rahmen auf der dem Kollektor zugewandten Seite der Rückwand eine Metallfolie in den Rahmen eingesetzt. Beim anschließenden Einbringen des Schaummaterials wird diese Metallfolie dann vollflächig mit dem Hartschaum verklebt.

Zudem oder alternativ hierzu ist denkbar, dass vor oder nach dem Vergießen von Schaummaterial in den Rahmen auf der dem Kollektor abgewandten Seite der Rückwand ein Schutzgewebe eingesetzt wird.

Weitere Einzelheiten und vorteilhafte Ausgestaltungen der Erfindung sind der nachfolgenden Beschreibung zu entnehmen, anhand derer die in den Figuren dargestellte Ausführungsform der Erfindung näher beschrieben und erläutert ist. Es zeigen:
- Figur 1: eine perspektivische Draufsicht auf ein erfindungsgemäßes Kollektorgehäuse;
- Figur 2: einen Ausschnitt einer Unteransicht des Gehäuses gemäß Figur 1;
- Figur 3: einen Schnitt durch eine Seitenwand des Gehäuses gemäß Figuren 1 und 2;
- Figur 4: einen Schnitt durch eine nicht verbaute Seitenwand eines Gehäuses gemäß Figuren 1 und 2;
- Figur 5: einen nicht verbauten Eckverbinder eines Gehäuses gemäß Figuren 1 und 2;
- Figur 6: den Eckverbinder gemäß Figur 5, wie er in den Figuren 1 und 2 verbaut ist; und
- Figur 7: einen Ausschnitt einer Innenansicht des Eckverbinders gemäß Figur 6.

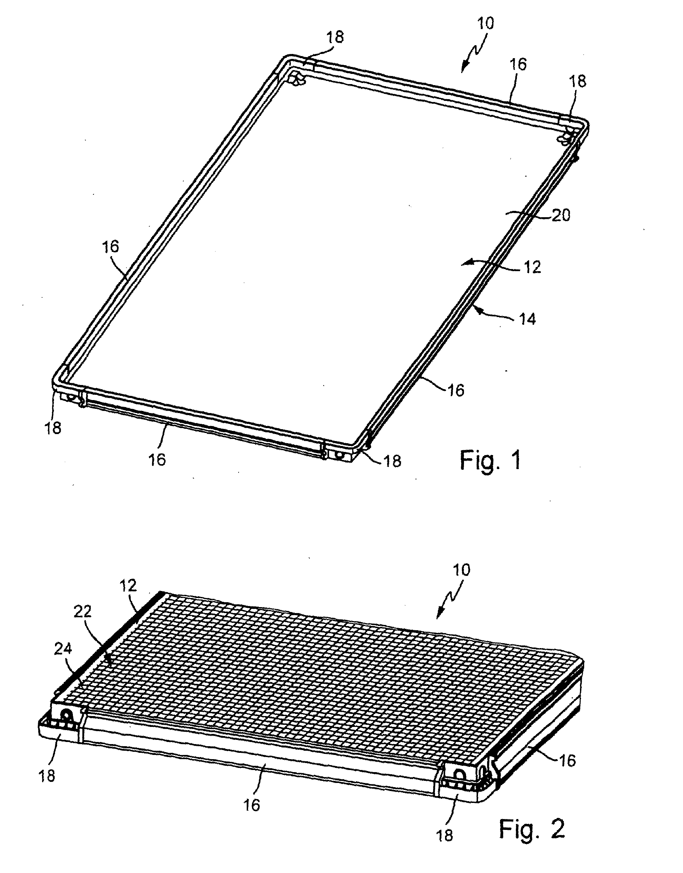

In den Figuren 1 und 2 ist ein Kollektorgehäuse 10 dargestellt, das eine Rückwand 12 sowie einen Rahmen 14 vorsieht. Der Rahmen 14 ist dabei aus vier Seitenwänden 16 sowie jeweils zwei benachbarte Seitenwände 16 miteinander verbindenden Eckverbindern 18 gebildet. Sämtliche Eckverbinder 18 sind dabei identisch ausgebildet. Sämtliche Seitenwände 16 sind als Hohlkammerprofile ausgebildet, die auf eine entsprechende Länge abgeschnitten sind. Gegenüberliegende Seitenwände 16 sind gleich lang.

Die Rückwand 12 besteht aus Hartschaum. Zur Herstellung der Rückwand 12 wird Schaummaterial in den vormontierten Rahmen 14 eingebracht. Aufgrund der Klebewirkung des Schaummaterials werden durch das Aushärten des Schaummaterials zu Hartschaum die Seitenwände 16 und die Eckverbinder 18 unlösbar miteinander verbunden. Insgesamt ergibt sich dadurch ein stabiler Verbund bestehend aus den vier Seitenwänden 16, den vier Eckverbindern 18 und der aus Hartschaum bestehenden Rückwand 12.

Auf der in der Figur 1 dargestellten Vorderseite 20 der Rückwand 12 kann eine Metallfolie und insbesondere eine Aluminiumfolie vorgesehen sein. Eine derartige Folie ist allerdings in den Figuren nicht dargestellt. Vorzugsweise deckt die Folie die Vorderseite 20 der Rückwand 12 vollständig ab.

Auf der in der Figur 2 zu sehenden Rückseite 22 ist ein engmaschiges Schutzgewebe 24, das insbesondere aus Kunststoff oder Metall sein kann, vorgesehen. Das Schutzgewebe 24 wird vorzugsweise vor dem Einbringen des Schaummaterials am Rahmen 14 fixiert. Wird dann das Schaummaterial in den Rahmen 14 eingebracht, ergibt sich eine unlösbare Verbindung zwischen der Rückwand 12 und dem Schutzgewebe 24. Durch das Schutzgewebe 24 kann zum einen insbesondere Tierfraß verhindert werden. Zum anderen können dennoch beim Aushärten des Schaummaterials entstehende Dämpfe ungehindert aus der Rückwand 12 abdampfen.

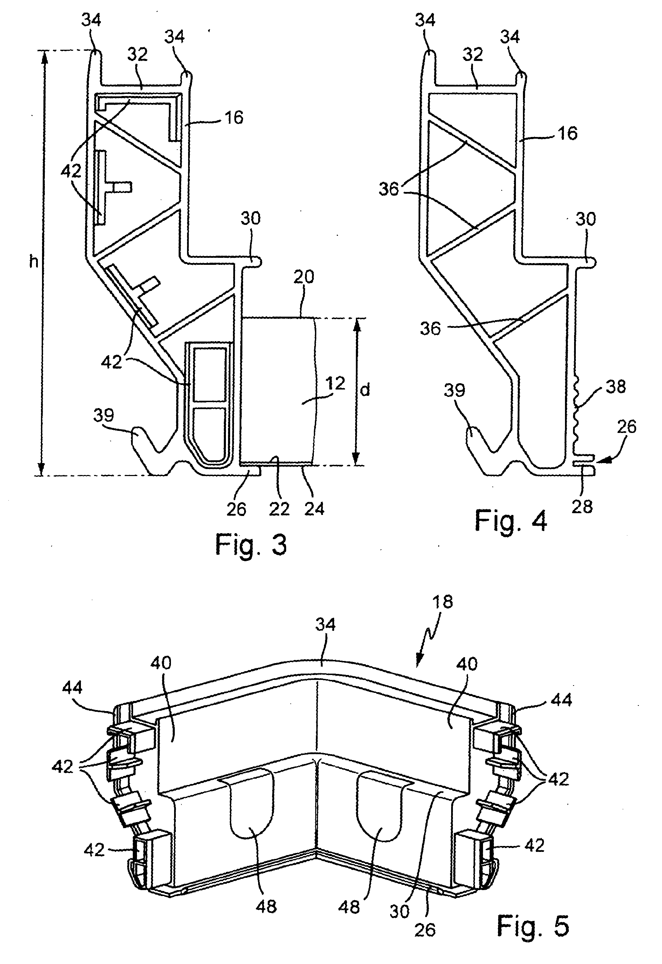

In der Figur 3, die einen Schnitt durch eine Seitenwand 16 im unmittelbar an einen Eckverbinder 18 angrenzenden Bereich zeigt, wird deutlich, dass es sich bei den Seitenwänden 16 um Hohlprofile mit über deren Länge konstanten Querschnitten handelt. Dabei wird aus Figur 3 deutlich, dass die Dicke d der Rückwand 12 ca. 1/3 der Höhe h der Seitenwände 16 entspricht. Vorzugsweise liegt die Höhe d im Bereich von 1/5 bis 1/2 der Höhe h und insbesondere im Bereich von 1/4 bis 1/3.

Wie insbesondere auch aus Figur 4 deutlich wird, ist auf der Innenseite der Seitenwände 16 im unteren Bereich ein nach innen gerichteter Aufnahmeabschnitt 26 zur Anlage des Schutzgewebes 24 vorgesehen. Der Aufnahmeabschnitt 26 ist als nach innen gerichteter Steg ausgebildet, so dass das Schutzgewebe 24 sicher aufliegen kann.

Wie aus Figur 4 deutlich wird, kann der Aufnahmeabschnitt 26 auch eine Nut 28 umfassen, in welche das Schutzgewebe 24 eingeführt werden kann.

Im mittleren Bereich der Seitenwände 16 ist ein nach innen gerichteter Montageabschnitt 30 vorgesehen, auf welchen der Kollektor aufgelegt bzw. an welchen der Kollektor im Gehäuse 10 montiert werden kann. Der Montageabschnitt 30 ist dabei als nach innen gerichtete Schulter ausgebildet.

Ferner sehen die Seitenwände 16 auf der der Rückwand 12 abgewandten Oberkante 32 Auflageabschnitte 34 zur Auflage und Einfassung einer das Gehäuse 10 verschließenden Kollektorscheibe vor.

Zur Versteifung der Seitenwände 16 sind in deren Inneren Verstrebungen 36 vorgesehen.

Insbesondere aus Figur 4 wird deutlich, dass die Seitenwände auf ihrer dem Inneren des Kollektorgehäuses 10 zugewandten Seite in dem Bereich, in dem die Rückwand 12 an die Seitenwand 16 angrenzt, einen Verzahnungsabschnitt 38 vorsieht. Hierdurch wird neben der stoffschlüssigen Verbindung der Rückwand 12 mit der jeweiligen Seitenwand 16 auch eine formschlüssige Verbindung erreicht. Der Verzahnungsabschnitt 38 wird insbesondere durch sich in Längsrichtung der Seitenwände 16 erstreckende Erhebungen und zwischen den Erhebungen liegenden Rillen gebildet.

Auf der Außenseite sehen die Seitenwände 16, wie aus Figuren 3 und 4 deutlich wird, einen Befestigungsabschnitt 39 zur Befestigung des Gehäuses 10 an einem Untergrund vor.

Wie aus Figur 5 deutlich wird, weisen die Eckverbinder 18 jeweils zwei um 90° zueinander versetzte Wandungsabschnitte 40 auf. Die Eckverbinder 18 sehen den Seitenwänden 16 entsprechend ausgebildete Aufnahmeabschnitte 26, Montageabschnitte 30 und Auflageabschnitte 34 vor. Zum Fügen der Eckverbinder 18 mit den jeweiligen Seitenwänden 16 sind an den freien Seiten der Eckverbinder 18 sich in Längsrichtung erstreckende Fügeabschnitte 42 vorgesehen. Über diese Fügeabschnitte 42, die in Figur 3 zu erkennen sind, können die Eckverbinder 18 mit den jeweiligen Seitenwänden 16 insbesondere lösbar auf einfache Art und Weise miteinander versteckt werden.

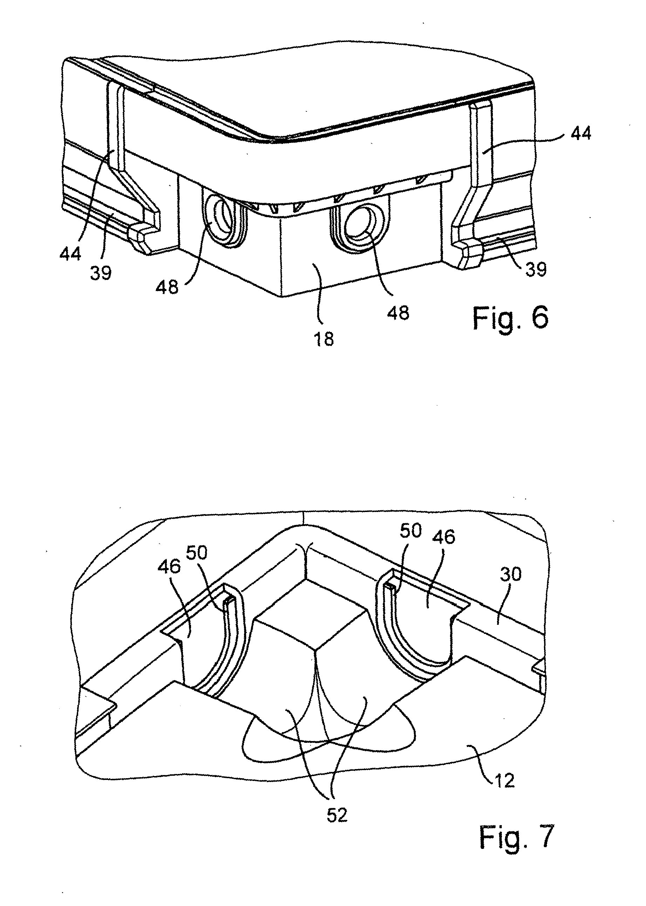

Auf der Außenseite der Eckverbinder 18 weisen diese noch Einfassungsabschnitte 44 auf, welche, wie aus Figur 6 deutlich zu erkennen ist, die jeweiligen Seitenwände 16 einfassen. Durch Vorsehen der Einfassungsabschnitte 44 kann insbesondere verhindert werden, dass beim Schäumen der Rückwand 12 kein Schaummaterial durch die Fügestelle Eckverbinder/Seitenwand ungewollt austreten kann.

Wie insbesondere aus den Ansichten gemäß Figuren 6 und 7 deutlich wird, weisen die Eckverbinder 18 Durchbrüche 46 auf, durch welche Leitungszugänge bzw. Leitungsabgänge zum Kollektor geführt werden können. Da sämtliche Eckverbinder identisch ausgebildet sind, sind an allen vier Eckverbindern 18 derartige Durchbrüche 46 vorgesehen. Zum Verschließen derjenigen Durchbrüche 46, durch welche keine Leitung verlaufen, sind Abdeckteile 48 vorgesehen. Die Abdeckteile 48 können senkrecht zur Ebene der Rückwand 12 in die Durchbrüche 46 eingeschoben werden. Hierzu sind an den die Durchbrüche 46 einfassenden Bereichen der Eckverbinder Führungsstege 50 vorgesehen. Die Abdeckteile können mit den Stegen 50 korrespondierende Nuten aufweisen.

Da die Durchbrüche 46 vergleichsweise nahe der Unterkante der Eckverbinder 18 vorgesehen sind, weist die Rückwand 12, bzw. der die Rückwand 12 bildende Hartschaum, auf der innen liegenden Seite im Bereich, der an die Durchbrüche 46 angrenzt, Ausformungen 52 für die vorzusehenden Leitungen auf.

Zur Herstellung des Kollektorgehäuses 10 wird wie folgt vorgegangen.

Zunächst werden die Seitenwände 16 auf die entsprechend vorgegebene Länge zugeschnitten. Dann werden die Seitenwände 16 mit den Eckverbindern 18 versteckt. Dabei wird das Schutzgewebe 22 in den von den Seitenwänden 16 und den Eckverbindern 18 gebildeten Rahmen eingesetzt. Anschließend wird insbesondere unter Hochdruck Schaummaterial zur Bildung der Rückwand 12 in den Rahmen 16 eingebracht. Durch Aushärten des Schaummaterials wird eine vergleichsweise stabile und dennoch leichte Hartschaumrückwand hergestellt. Die Hartschaumrückwand 12 verbindet dabei die einzelnen Bauteile des Gehäuses 10 unlösbar miteinander. Zur Herstellung der in Figur 7 dargestellten Ausformung können beim Einbringen des Schaummaterials im Rahmen 14 Kerne vorgesehen sein, die nach dem Ausschäumen bzw. nach dem Aushärten des Schaummaterials entfernt werden.

Der Eckverbinder 18 sowie die Seitenwände 16 sind vorzugsweise aus Kunststoffmaterial, wobei die Seitenwände 16 durch Extrusion und die Eckverbinder 18 durch Spritzguss hergestellt sind.

## Patentansprüche

1. Kollektorgehäuse (10) für Solarkollektoren, mit einer eine im wesentlichen rechteckigen Grundfläche vorsehenden Rückwand (12) und mit einem die Rückwand einfassenden Rahmen (14), **dadurch gekennzeichnet, dass** der Rahmen (14) von aus Hohlkammerprofilen gebildeten Seitenwänden (16) sowie die Seitenwände (16) miteinander verbindenden Eckverbindern (18) zusammengesetzt ist und dass die Rückwand (12) aus durch Einbringen von Schaummaterial in den vormontierten Rahmen (14) hergestelltem Hartschaum ist.

2. Gehäuse (10) nach Anspruch 1, **dadurch gekennzeichnet, dass** der Hartschaum die Seitenwände (16) und die Eckverbinder (18) unlösbar miteinander verbindet.

3. Gehäuse (10) nach Anspruch 1 oder 2, **dadurch gekennzeichnet, dass** die Eckverbinder (18) Durchbrüche (46) für Leitungszugänge und/oder Leitungsabgänge vorsehen.

4. Gehäuse (10) nach Anspruch 3, **dadurch gekennzeichnet, dass** die Rückwand (12) auf der innenliegenden Seite in dem Bereich, der an die Durchbrüche (46) angrenzt, Ausformungen (52) für Leitungen aufweist.

5. Gehäuse (10) nach Anspruch 4, 5 oder 6, **dadurch gekennzeichnet, dass** Abdeckteile (48) zur Abdeckung der Durchbrüche (46) vorgesehen sind.

6. Gehäuse (10) nach wenigstens einem der vorhergehenden Ansprüche, **dadurch gekennzeichnet, dass** auf der der Innenseite des Kollektorgehäuse (10) zugewandten Vorderseite (20) der Rückwand (12) eine Metallfolie vorgesehen ist.

7. Gehäuse (10) nach Anspruch 8, **dadurch gekennzeichnet, dass** das Schaummaterial unmittelbar auf die Metallfolie aufgebracht ist.

8. Gehäuse (10) nach wenigstens einem der vorhergehenden Ansprüche, **dadurch gekennzeichnet, dass** auf der der Innenseite des Kollektorgehäuses (10) abgewandten Rückseite (22) der Rückwand (12) ein Schutzgewebe (24) oder ein Schutzgitter vorgesehen ist, wobei das Schaummaterial unmittelbar auf das Schutzgewebe (24) oder das Schutzgitter aufgebracht sein kann.

9. Gehäuse (10) nach Anspruch 8, **dadurch gekennzeichnet, dass** die Seitenwände (16) und/oder die Eckverbinder (18) auf ihrer dem Inneren des Kollektorgehäuses (10) zugewandten Innenseite im unteren Endabschnitt einen nach innen gerichteten Aufnahmeabschnitt (26) zur Aufnahme des Schutzgewebes (24) aufweisen.

10. Gehäuse (10) nach wenigstens einem der vorhergehenden Ansprüche, **dadurch gekennzeichnet, dass** die Seitenwände (16) und/oder die Eckverbinder (18) auf der der Rückwand (12) abgewandten Oberseite Auflageabschnitte (34) zur Auflage und/oder Einfassung einer Kollektorscheibe vorsehen.

11. Gehäuse (10) nach wenigstens einem der vorhergehenden Ansprüche, **dadurch gekennzeichnet, dass** die Seitenwände (16) und/oder die Eckverbinder (18) auf ihrer dem Inneren des Kollektorgehäuses (10) zugewandten Innenseite einen wenigstens abschnittsweise parallel zur Rückwand (12) verlaufenden Montageabschnitt (30) zur Befestigung des Solarkollektors aufweisen.

12. Gehäuse (10) nach wenigstens einem der vorhergehenden Ansprüche, **dadurch gekennzeichnet, dass** die Seitenwände (16) und/oder die Eckverbinder (18) auf ihrer dem Inneren des Kollektorgehäuses (10) zugewandten Innenseite in dem Bereich, in dem die Rückwand (12) an die Innenseite angrenzt, einen Verzahnungsabschnitt (38) zur Verzahnung mit der Rückwand (12) aufweisen.

13. Verfahren zur Montage eines Kollektorgehäuse (10) für Solarkollektoren, insbesondere eines Kollektorgehäuses (10) nach wenigstens einem der vorhergehenden Ansprüche, mit einer eine im wesentlichen rechteckigen Grundfläche vorsehenden Rückwand (12) und mit einem die Rückwand (12) einfassenden Rahmen (14), **gekennzeichnet durch** folgende Schritte:
- Bilden des Rahmens (14) aus von Hohlkammerprofilen gebildeten Seitenwänden (16) und aus die Seitenwände (16) miteinander verbindenden Eckverbindern (18),
- Einbringen von Schaummaterial in den Bodenbereich des Rahmens (14) zur Herstellung einer Rückwand (12) aus Hartschaum.

14. Verfahren nach Anspruch 13, **dadurch gekennzeichnet, dass** vor oder nach dem Vergießen des Schaummaterials in den Rahmen (14) auf der dem Kollektor zugewandten Seite der Rückwand (12) eine Metallfolie in den Rahmen eingesetzt wird.

15. Verfahren nach Anspruch 13 oder 14, **dadurch gekennzeichnet, dass** vor oder nach dem Vergießen des Schaummaterials in den Rahmen (14) auf der dem Kollektor abgewandten Seite der Rückwand (12) ein Schutzgewebe (24) eingesetzt wird.
